# EUROPEAN PATENT APPLICATION

(11) **EP 4 718 679 A2**
(43) Date of publication of application: **01.04.2026**
(21) Application number: 25199394.5
(22) Date of filing: 01.09.2025
(51) Int. Cl.: H02J 7/50, H02J 7/70, H02J 7/80, H02J 9/06

(54) **MULTI-BAY BATTERY PACK CHARGER AND POWER SUPPLY**

(30) Priority: 06.09.2024 US 202463691466 P
(71) Applicant: Milwaukee Electric Tool Corporation, Brookfield, WI 53005-2550 (US)
(72) Inventor: KOEPPEL, Michael B., Wittenberg, WI (US); NENSEL, Phillip R., WAUCONDA, IL (US); MEYYAPPAN, Vishal, MILWAUKEE, WI (US); SHIRAZI, Omid, WAUWATOSA, WI (US); WENZLICK, Jacob, MILWAUKEE, WI (US); VAN WORMER, Jacob, OCONOMOWOC, WI (US); BILLETDEAUX, Samantha, NEW BERLIN, WI (US); RINALDI, Nicholas, GRAFTON, WI (US); BEAM, Nicholas, MILWAUKEE, WI (US); ALVES, Richard, WAUKESHA, WI (US)
(74) Representative: Forresters IP LLP

(57) **Abstract**

A multi-bay battery pack charger and power supply including a device housing, a handle at a top portion of the device housing, a user interface provided on a front side of the device housing between the top portion of the device housing and a bottom portion of the device housing, and a first battery pack interface and a second battery pack interface provided at the bottom portion of the device housing. The first battery pack interface including a terminal block configured to removably receive a battery pack.

## Description

### CROSS-REFERENCE TO RELATED APPLICATIONS

This application claims the benefit of U.S. Provisional Application No. 63/691,466 filed September 6, 2024. The entire disclosure of the above application is incorporated by reference.

### SUMMARY

Power tool battery packs are used at worksites to operate various power tools. Worksites may have limited availability of AC power (i.e., AC outlets). Additionally, power tool battery packs may need to be charged before being used for other applications.

In some aspects, the techniques described herein relate to a multi-bay battery pack charger and power supply including: a device housing; a handle at a top portion of the device housing; a user interface provided on a front side of the device housing between the top portion of the device housing and a bottom portion of the device housing; and a first battery pack interface and a second battery pack interface provided at the bottom portion of the device housing, the first battery pack interface including a terminal block configured to removably receive a battery pack.

In some aspects, the techniques described herein relate to a multi-bay battery pack charger and power supply including: a first battery pack interface configured to removably receive a first battery pack; a second battery pack interface configured to removably receive a second battery pack; a power output; a discharging circuit electrically connected between (i) the first battery pack interface and the second battery pack interface and (ii) the power output; and a controller electrically connected to the discharging circuit and configured to: sequentially discharge the first battery pack and the second battery pack using the discharging circuit, wherein a transition time for switching between the first battery pack and the second battery pack during sequential discharge is less than 125 milliseconds.

Before any embodiments are explained in detail, it is to be understood that the embodiments are not limited in their application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software-based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%, or more) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Other aspects of the embodiments will become apparent by consideration of the detailed description and accompanying drawings.

### BRIEF DESCRIPTION OF THE DRAWINGS

FIG. 1 is a perspective view of a multi-bay battery pack charger and power supply according to some examples.
FIG. 2 is a schematic of the multi-bay battery pack charger of FIG. 1 according to some examples.
FIG. 3 is a perspective view of the multi-bay battery pack charger and power supply of FIG. 1 according to some examples.
FIG. 4 is an exploded view of a handle of the multi-bay battery pack charger and power supply of FIG. 1 according to some examples.
FIG. 5 is a perspective view of the multi-bay battery pack charger and power supply of FIG. 1 mounted to a wall plate according to some examples.

### DETAILED DESCRIPTION

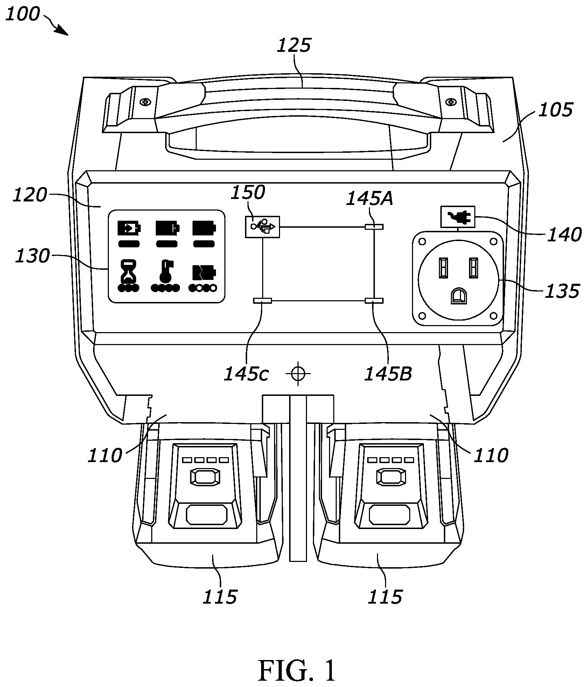

FIG. 1 illustrates an example multi-bay battery pack charger and power supply 100. The multi-bay battery pack charger and power supply 100 includes a device housing 105, a plurality of battery pack interfaces 110 configured to removably receive a plurality of battery packs 115, and a user interface 120. The device housing 105 includes a handle 125 provided at a top portion of the device housing 105. The battery pack interfaces 110 are provided at a bottom of the device housing 105 opposite the handle 125. In the illustrated example, the multi-bay battery pack charger and power supply 100 includes two battery pack interfaces 110 configured to removably (e.g., slidably) receive two battery packs 115. Each of the plurality of battery pack interfaces 110 includes a terminal block including terminals (e.g., power terminals and communication terminals) to connect to the corresponding battery pack terminal blocks of the battery packs 115. The user interface 120 is provided on a front side of the device housing 105 between the top portion and the bottom portion of the device housing 105.

The battery packs 115 are, for example, power tool battery packs that are used to operate battery-powered power tools. In some examples, the battery packs 115 are 18 Volt nominal voltage Lithium-Ion Chemistry based power tool battery packs. In other examples, the battery packs 115 may have a different nominal voltage (e.g., 12 Volts, 36 Volts, 72 Volts, and the like) and different Chemistry (e.g., Nickel-based).

The user interface 120 includes a display section 130, an AC outlet 135, an AC enable button 140, a plurality of DC outlets 145, and a DC enable button 150. In one example, the display section 130 is, for example, an LCD display, an LED display, an e-ink display, or the like. In the example illustrated, the display section 130 includes a plurality of indicators to provide an indication of a status of the multi-bay battery pack charger and power supply 100 and the connected battery packs 115. For example, the display section 130 may show a fuel gauge relating to the battery packs 115, status of the outlets, over-temperature conditions, and the like.

The AC enable button 140 is, for example, a push button switch that can be used to enable and disable the AC outlet 135. The AC enable button 140 may include a transparent or translucent material provided over an LED light. The AC enable button 140 may therefore also indicate whether the AC outlet 135 is enabled or disabled. In the example illustrated, the plurality of DC outlets 145 includes three DC outlets 145. In the example illustrated, the plurality of DC outlets 145 includes three DC outlets: a first DC outlet 145A, a second DC outlet 145B, and a third DC outlet 145C. The first DC outlet 145A is a first-type of DC outlet, for example, a Universal Serial Bus-C (USB-C) Power Delivery (PD) outlet configured to provide a power output at a maximum of about 100 Watts. The second DC outlet 145B and the third DC outlet 145C are a second-type of DC outlet, for example, a Universal Serial Bus-C (USB-C) outlet configured to provide a power output at a maximum of about 15 Watts. The DC enable button 150 is, for example, a push button switch that can be used to enable and disable the DC outlets 145. The DC enable button 150 may include a transparent or translucent material provided over an LED light. The DC enable button 150 may therefore also indicate whether the DC outlets 145 are enabled or disabled. The DC outlets may be unidirectional (i.e., output only) or bidirectional (i.e., input and output).

The device housing 105 may be made of lightweight plastic material. The multi-bay battery pack charger and power supply 100 may have a weight of less than 4 lbs without the battery packs 115.

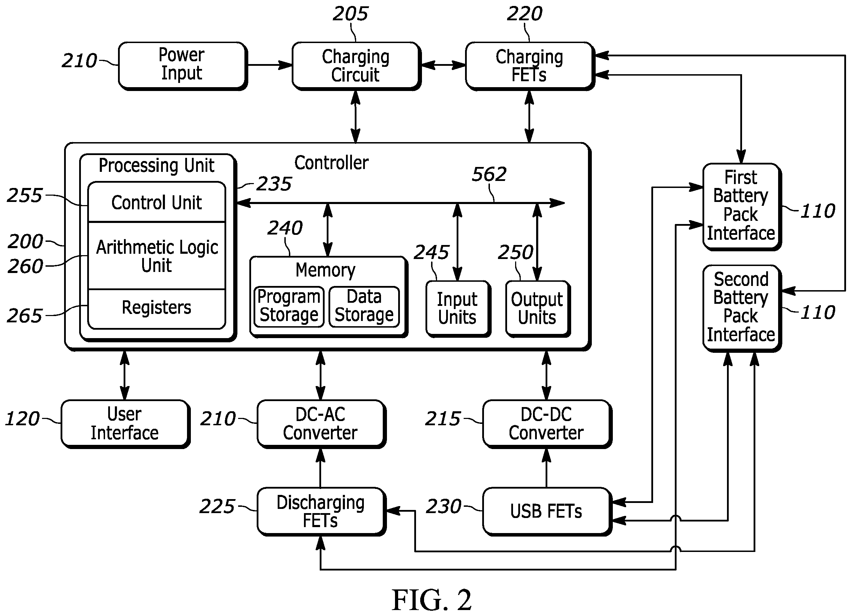

FIG. 2 is a schematic illustration of a controller 200 of the multi-bay battery pack charger and power supply 100. The controller 200 is electrically and/or communicatively connected to a variety of modules or components of the multi-bay battery pack charger and power supply 100. For example, the illustrated controller 200 is connected to the user interface 120, a charging circuit 205, a DC-AC converter 210, a DC-DC converter 215, charging FETs 220, discharging FETs 225, and USB FETs 230. The controller 200 provides control signals to control the user interface 120, the charging circuit 205, the DC-AC converter 210, the DC-DC converter 215, the charging FETs 220, the discharging FETs 225, and the USB FETs 230.

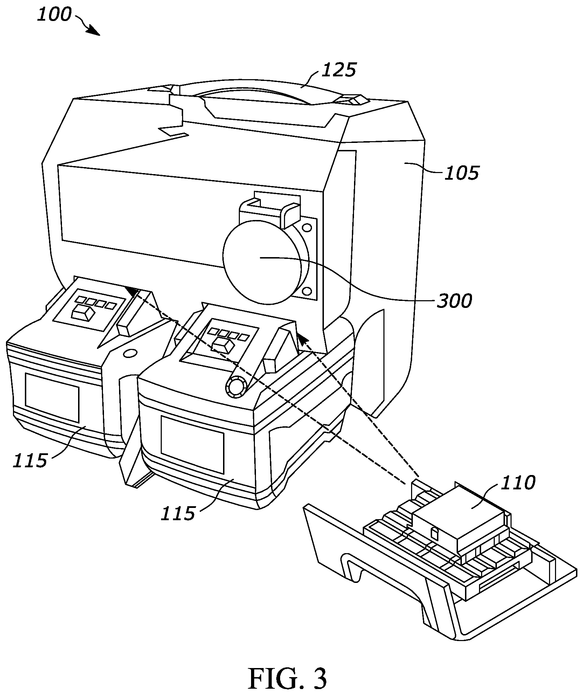

The controller 200 includes combinations of hardware and software that are operable to, among other things, control the operation of the multi-bay battery pack charger and power supply 100. For example, the controller 200 includes, among other things, a processing unit 235 (e.g., a microprocessor, a microcontroller, an electronic processor, an electronic controller, or another suitable programmable device), a memory 240, input units 245, and output units 250. The processing unit 235 includes, among other things, a control unit 255, an arithmetic logic unit ("ALU") 260, and a plurality of registers 265 (shown as a group of registers in FIG. 3) and is implemented using a known computer architecture (e.g., a modified Harvard architecture, a von Neumann architecture, etc.). The processing unit 235, the memory 240, the input units 245, and the output units 250, as well as the various modules or circuits connected to the controller 200 are connected by one or more control and/or data buses (e.g., common bus 270). The control and/or data buses are shown generally in FIG. 2 for illustrative purposes. Although the controller 200 is illustrated in FIG. 2 as one controller, the controller 200 could also include multiple controllers configured to work together to achieve a desired level of control for the multi-bay battery pack charger and power supply 100. As such, any control functions and processes described herein with respect to the controller 200 could also be performed by two or more controllers functioning in a distributed manner.

The memory 240 is a non-transitory computer readable medium and includes, for example, a program storage area and a data storage area. The program storage area and the data storage area can include combinations of different types of memory, such as a read only memory ("ROM"), a random access memory ("RAM") (e.g., dynamic RAM ["DRAM"], synchronous DRAM ["SDRAM"], etc.), electrically-erasable programmable ROM ("EEPROM"), flash memory, a hard disk, an SD card, or other suitable magnetic, optical, physical, or electronic memory devices. The processing unit 235 is connected to the memory 240 and is configured to execute software instructions that are capable of being stored in a RAM of the memory 240 (e.g., during execution), a ROM of the memory 240 (e.g., on a generally permanent basis), or another non-transitory computer readable medium such as another memory or a disc. Software included in the implementation of the multi-bay battery pack charger and power supply 100 and controller 200 can be stored in the memory 240 of the controller 200. The software includes, for example, firmware, one or more applications, program data, filters, rules, one or more program modules, and other executable instructions. The controller 200 is configured to retrieve from the memory 240 and execute, among other things, instructions related to the control processes and methods described herein. In other embodiments, the controller 200 includes additional, fewer, or different components.

The multi-bay battery pack charger and power supply 100 includes a power input 275, for example, a power cord that can be plugged into a wall outlet to receive power from an electrical grid or a power generator. The power cord may be removable. The power input 275 is provided to the charging circuit 205 to charge the battery packs 115. In one example, the multi-bay battery pack charger and power supply 100 includes a port to connect to a solar power source (e.g., a solar panel) to receive charging power for the battery packs 115. The charging circuit 205 includes charging field effect transistors (FETs) 220 that selectively connect the power input to the battery pack interfaces 110 to charge the battery packs 115 received in the battery pack interfaces 110. The charging circuit 205 may be a rapid charger or a standard charger. The controller 200 controls the charging FETs 220 to charge the battery packs 115 received in the battery pack interfaces 110. The controller 200 charges the battery packs 115 received in the battery pack interfaces 110 sequentially such that only one battery pack 115 is being charged at one time. Additionally, the controller 200 operates the battery packs 115 independently, that is, neither in series nor in parallel. Rather, the controller 200 may operate the battery packs sequentially as further described in the table below. The controller 200 uses the discharging FETs 225 to connect the battery packs 115 to the DC-AC converter and uses the USB FETs 230 to connect the battery pack 115 to the DC-DC converter.

The DC-AC converter 210 is, for example, an inverter circuit including a power switching network in an inverter bridge (3-bridge) configuration. The DC-AC converter 210 converts DC power from the battery packs 115 received in the battery pack interfaces 110 to AC power provided at the AC outlet 135. The DC-AC converter 210 is configured to provide a pure sine wave AC output at about 400 Watts. The discharging FETs 225 selectively electrically couple the battery pack interfaces 110 to the DC-AC converter 210. The DC-DC converter 215 converts DC power from the battery packs 115 at a first voltage to DC power provided to the DC outlets 145 at a second voltage. The DC-DC converter 215 is configured to provide power at about 100 Watts from the first DC outlet 145A and at about 15 Watts from each of the second DC outlet 145B and the third DC outlet 145C. USB FETs 230 selectively electrically couple the battery pack interfaces 110 to the DC-DC converter 215.

The controller 200 controls the DC-AC converter 210, the DC-DC converter 215, the discharge FETs 225, and the USB FETs 230 to sequentially discharge the plurality of connected battery packs 115. In one example, not all battery packs 115 are discharged at the same time. For example, a first battery pack 115 is discharged at a first time while a second battery pack 115 is not discharged (i.e., when both battery packs are connected to or received at the battery pack interfaces 110). When the first battery pack 115 reaches an end of discharge or at a different transition point, the second battery pack 115 is discharged at a second time while the first battery pack 115 is not discharged. The second time is after the first time (e.g., immediately after the first time). The controller 200 may control the components such that the transition for sequential discharge between the first battery pack 115 and the second battery pack 115 (i.e., between the first time and second time) is less than 125 milliseconds (ms). In one example, the transition time is between 15 ms and 30 ms. In some examples, the multi-bay battery pack charger and power supply 100 may charge the first battery pack 115 while simultaneously discharging the second battery pack 115. For example, the controller 200 may charge the first battery pack 115 while discharging the second battery pack 115 to the USB outlets 145 (e.g., pseudo-passthrough mode). In this example, the AC outlet 135 may be disabled. The controller 200 may use a multiplexer or a multiplexer control to control the various FETs. The display section 130 may provide indications charging and discharging using indicating LED lights. In some examples, the multi-bay battery pack charger and power supply 100 operates to charge or discharge even when only a single battery pack 115 is received.

In one example, the multi-bay battery pack charger and power supply 100 includes air vents and a fan (not shown). The controller 200 controls the fan to generate air flow for cooling the components of the multi-bay battery pack charger and power supply 100. The fan may operate at a cumulative LwA (i.e., sound power) of less than 55 deciBels (dB)(A).

FIG. 3 illustrates the multi-bay battery pack charger and power supply 100 according to another example. In the example illustrated, the multi-bay battery pack charger and power supply 100 includes an outlet cover 300 to cover the AC outlet 135. FIG. 3 also illustrates the battery pack interface 110 configured to receive power tool battery packs 115.

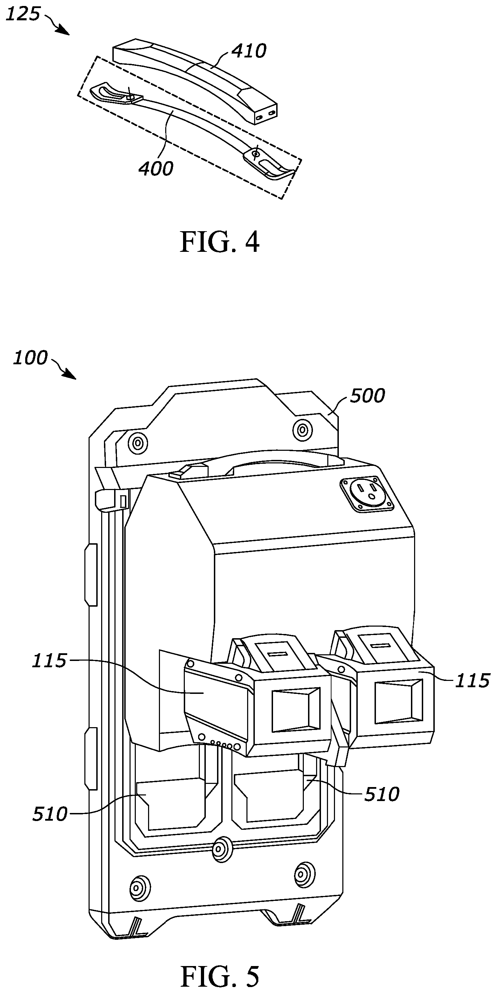

FIG. 4 illustrates an exploded view of the handle 125. The handle 125 includes a base 400 that is fixed to the device housing 105. The handle 125 also includes an overmold 410 provided over the base 400 that provides a gripping area for a user.

In some examples, the multi-bay battery pack charger and power supply 100 is compatible for mounting to power tool storage systems. FIG. 5 illustrates an example of the multi-bay battery pack charger and power supply 100 is mounted to a wall plate 500. The wall plate 500 may be part of a power tool storage system. The components of the power tool storage system may include mounting features 510 that correspond with each other to, for example, slidably mount to each other. In the example illustrated, the wall plate 500 may be fixed to a wall using, for example, fasteners. The multi-bay battery pack charger and power supply 100 includes mounting features 510 (not shown) on the back side (i.e., opposite the front side where the user interface 120 is provided) to correspond with mounting features 510 of the wall plate 500 so that the multi-bay battery pack charger and power supply 100 is mounted to the wall plate 500 using the corresponding mounting features 510.

Thus, embodiments described herein provide, among other things, a multi-bay battery pack charger and power supply.

## Claims

1. A multi-bay battery pack charger and power supply comprising:
a device housing;
a handle at a top portion of the device housing;
a user interface provided on a front side of the device housing between the top portion of the device housing and a bottom portion of the device housing; and
a first battery pack interface and a second battery pack interface provided at the bottom portion of the device housing, the first battery pack interface including a terminal block configured to removably receive a battery pack.

2. The multi-bay battery pack charger and power supply of claim 1, wherein the user interface includes an AC enable button and an AC outlet.

3. The multi-bay battery pack charger and power supply of claim 2, further comprising:
a DC-AC converter electrically connected between (i) the first battery pack interface and the second battery pack interface and (ii) the AC outlet and configured to convert DC power received via the first battery pack interface and the second battery pack interface to AC power provided at the AC outlet; and
a controller electrically coupled to the AC enable button and the DC-AC converter and configured to:
enable/disable the AC outlet in response to actuation of the AC enable button.

4. The multi-bay battery pack charger and power supply of claim 3, wherein the DC-AC converter is configured to provide a pure sine wave AC output at about 400 Watts.

5. The multi-bay battery pack charger and power supply of claim 3, wherein the AC enable button includes a light emitting diode (LED) and a transparent or translucent material provided over the LED, wherein the controller is electrically coupled to the LED and configured to:
enable the LED when the AC outlet is enabled; and
disable the LED when the AC outlet is disabled.

6. The multi-bay battery pack charger and power supply of claim 1, wherein the user interface includes a DC enable button and a plurality of Universal Serial Bus-C (USB-C) outlets including at least one USB-C power delivery (PD) outlet.

7. The multi-bay battery pack charger and power supply of claim 6, further comprising:
a DC-DC converter electrically connected between (i) the first battery pack interface and the second battery pack interface and (ii) the plurality of USB-C outlets and configured to convert DC power received via the first battery pack interface and the second battery pack interface at a first voltage to DC power provided at the plurality of USB-C outlets at a second voltage; and
a controller electrically coupled to the DC enable button and the DC-DC converter and configured to:
enable/disable the plurality of USB-C outlets in response to actuation of the DC enable button such that the single DC enable button is used to enable/disable the plurality of USB-C outlets.

8. The multi-bay battery pack charger and power supply of claim 7:
wherein the DC-DC converter is configured to provide a maximum power of about 100 Watts from a first USB-C outlet of the plurality of USB-C outlets and provide a maximum power of about 15 Watts from a second USB-C outlet of the plurality of USB-C outlets, or
wherein the DC enable button includes a light emitting diode (LED) and a transparent or translucent material provided over the LED, wherein the controller is electrically coupled to the LED and configured to:
enable the LED when the plurality of USB-C outlets are enabled; and
disable the LED when the plurality of USB-C outlets are disabled.

9. The multi-bay battery pack charger and power supply of claim 1:
wherein the handle includes a base fixed to the device housing and an overmold provided over the base that provides a gripping area for a user, or
wherein the device housing has a weight of less than four pounds, or
further comprising a mounting feature provided on a back portion of the device housing and configured to slidably mount to a power tool storage system.

10. A multi-bay battery pack charger and power supply comprising:
a first battery pack interface configured to removably receive a first battery pack;
a second battery pack interface configured to removably receive a second battery pack;
a power output;
a discharging circuit electrically connected between (i) the first battery pack interface and the second battery pack interface and (ii) the power output; and
a controller electrically connected to the discharging circuit and configured to:
sequentially discharge the first battery pack and the second battery pack using the discharging circuit, wherein a transition time for switching between the first battery pack and the second battery pack during sequential discharge is less than 125 milliseconds.

11. The multi-bay battery pack charger and power supply of claim 10:
wherein the transition time is between 15 milliseconds and 30 milliseconds, or
further comprising:
a power input; and
a charging circuit electrically connected between (i) the first battery pack interface and the second battery pack interface and (ii) the power input,
wherein the controller is electrically coupled to the charging circuit and configured to:
sequentially charge the first battery pack and the second battery pack using the charging circuit, wherein a transition time for switching between the first battery pack and the second battery pack during sequential discharge is less than 125 milliseconds.

12. The multi-bay battery pack charger and power supply of claim 11, wherein the controller is further configured to:
charge the first battery pack using the charging circuit while simultaneously discharging the second battery pack using the discharging circuit.

13. The multi-bay battery pack charger and power supply of claim 12, further comprising:
an AC outlet; and
a USB-C outlet,
wherein the discharging circuit includes:
a DC-AC converter electrically connected between (i) the first battery pack interface and the second battery pack interface and (ii) the AC outlet and configured to convert DC power received via the first battery pack interface and the second battery pack interface to AC power provided at the AC outlet; and
a DC-DC converter electrically connected between (i) the first battery pack interface and the second battery pack interface and (ii) the USB-C outlet and configured to convert DC power received via the first battery pack interface and the second battery pack interface at a first voltage to DC power provided at the USB-C outlet at a second voltage,
preferably wherein the first battery pack and the second battery pack have a nominal voltage of about 18 volts.

14. The multi-bay battery pack charger and power supply of claim 13, further comprising:
a power input configured to receive a power cord plugged into a wall outlet, wherein the controller is further configured to disable the AC outlet when the first battery pack is being charged using power from the power input while simultaneously discharging the second battery pack to the USB-C outlet.

15. The multi-bay battery pack charger and power supply of claim 13, wherein the DC-AC converter is configured to provide a pure sine wave AC output at about 400 Watt and wherein the DC-DC converter is configured to provide a maximum power of about 100 Watts from the USB-C outlet.
